(19) Europäisches Patentamt
European Patent Office
Office européen des brevets

(11) **EP 3 259 985 A1**

(12) **EUROPEAN PATENT APPLICATION**

(43) Date of publication:
**27.12.2017  Bulletin 2017/52**

(51) Int Cl.:
*A01K 47/06* (2006.01)     *H04R 1/02* (2006.01)
*A01K 47/02* (2006.01)     *A01K 29/00* (2006.01)

(21) Application number: **16175269.6**

(22) Date of filing: **20.06.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **IAV Engineering SARL
1295 Tannay (CH)**

(72) Inventors:
• **CHRITIN, Vincent
01170 Cessy (FR)**
• **VAN LANCKER, Eric
1290 Chavannes-des-Bois (CH)**

(74) Representative: **Stolmár & Partner Intellectual
Property GmbH
Avenue Louis-Casaï 18
1209 Genève (CH)**

(54) **DEVICE FOR MONITORING AND MEASURING THE HEALTH OF A BEE COLONY, ITS ACTIVITY LEVEL AND PRODUCTIVITY**

(57)    The present invention relates to a measuring device (2000, 5000, 6000, 8000) for measuring bees' activity, health and productivity in a beehive (1000), the measuring device (2000, 5000, 6000, 8000) comprising: a frame (2100, 5100, 6100, 8100) enclosing a cavity (2110), the frame (2100, 5100, 6100, 8100) comprising at least an acoustically transmitting surface (2120, 6121, 6122, 7123, 8124), and an acoustic transducer (2200), placed within the cavity (2110).

*Fig. 2A*

## Description

The present invention generally relates to the field of measuring devices. In particular, it relates to a device for measuring and monitoring bees colony's activity, such as health and productivity in a beehive.

## Background of the invention

A beehive hosts a colony of bees comprising several tens of thousands of bees. Up to now a beekeeper must go to the hive in order to assess the health and activity level of the colony. The hive must be opened and visually inspected.

This requires time and effort even for a limited number of beehives, especially when the hives are not physically located in a single location. For professional or commercial beekeepers having hundreds or thousands of hives, often many kilometers apart from each other such routine checks require considerable time. Moreover, such checking activity disturbs the bees.

Prior attempts have been made at measuring bees' activity by inserting an acoustic transducer into the hive. One such is described in US 2007/0224914. However, this approach presents the disadvantage that the bees will progressively cover any such foreign object with wax or propolis, thereby rendering it useless in a matter of days. Moreover, a single acoustic transducer can only determine sound pressure at a given location, namely where it is located, whereas, the sound pressure can vary considerably inside the hive. For example there can be a 10 dB acoustic pressure difference inside any active hive, from the center to the sides of the hive. Another disadvantage is that should a single bee be present right on the acoustic transducer itself, or very close, a single bee could produce an acoustic pressure similar to that of the entire colony at a distance. In this event, the acoustic pressure would not be accurately measured. In addition, the behavior of a colony can vary within short time lapses of a few minutes or less, as a result of swarming, the presence of a predator or intervention by the beekeeper.

The behavior will also vary over longer periods dependent on nocturnal versus diurnal or due to the natural and seasonal sequence of blooming flowers and the respective species. These periods of weeks, months and in some cases years are important to monitor and track. Currently there are no devices to monitor and track these functions and this is difficult for the beekeeper.

It is therefore desirable to provide a device that can be permanently active, so as to measure short-time activity and changes, which can be remote and autonomous. This device will perform all these functions at an economical cost, for either the individual or professional beekeeper.

Moreover theft is a growing problem in beekeeping. Any device with a visible antenna, solar panel or external power source can increase the interest in theft. It is therefore desirable to provide a device without such appendages.

It is an object of this invention to provide a device that can measure and/or monitor and/or track the activity of a bee colony. In some implementations, the device can preferably continuously monitor and can transmit the monitored data remotely, for instance to a tablet, computer or smartphone. In some implementations, the device can provide a series of indices that give reliable data hourly, daily, monthly and annually. In some implementations, the device can not only monitor the health and activity of the colony, but also provide reliable forecasts of seasonal production of honey from the hive.

## Summary of the invention

The above-mentioned problems are solved by the teaching of the independent claims.

Generally, the present invention exploits the idea that a sound can be picked-up through an acoustically transmitting surface submitted to the external acoustic pressure of interest, this, either in a cavity, even possibly totally sealed, in which an acoustic transducer such as a microphone is placed, or also in the cavity where another acoustic transducer, such an accelerometer or a piezoelectric material is placed against an internal surface of the cavity.

In this manner, the acoustic detection surface is increased with respect to the size of the acoustic transducer of the size of its membrane surface in the case of a microphone, preferably by over three orders of magnitude and, in case of the use of an accelerometer or a piezoelectrical material instead of a microphone, the same principle and increase ratio applies due to the acoustically induced mobility of the acoustic detection surface, i.e. the vibrational response of the detection surface submitted to an external parietal pressure. Also, in this manner, the acoustic detection surface becomes a spatial integrator of a size comparable to the size of the colony. Additionally, neither the acoustic transducer nor the acoustically transmitting surface, which is substantially smooth, at least on the side facing the interior of the beehive, will be covered in propolys or wax by the bees and can reliably perform its function over a long time. And the more an acoustic pressure will be acting on the whole surface and with a wavelength corresponding to the elastic modes of the surface, the more it will be efficiently transmitted.

In addition, by appropriately selecting the physical parameters of the acoustically transmitting surface and/or the dimensions of the cavity and/or the characteristics of the acoustic transducer, the system comprising the acoustic transducer, the cavity and the acoustically transmitting surface can be tuned so as to be sensitive to a specific range of frequencies which relate to the activity level of the bees, itself correlated to their humming. In this manner, the acoustically transmitting surface and the cavity not only provide a physical protection of the acoustic transducer but also form an acoustic or vibroacoustic system which improves the detection capabilities of the acoustic transducer, the spatial extension of the acoustic pressure detection, and avoids any possibility that the detected acoustic pressure would be induced by a single or only a small number of bees close to the system.

An embodiment of the present invention can relate to a measuring device for measuring bees' activity in a beehive, the measuring device comprising: a frame enclosing a cavity, the frame comprising at least an acoustically transmitting surface, and an acoustic transducer, placed within the cavity.

As a result, it is possible to protect the acoustic transducer from being covered in wax. At the same time, it is possible to increase the sensitivity of the measuring device. Moreover, it is possible to avoid the signal measured by the acoustic transducer to become overestimated or saturated from a bee too close to the acoustic transducer.

In some embodiments, the frame can comprise holes configured so as not to allow the passage of bees.

With this approach it is possible to provide a cavity which does not necessarily need to be hermetically closed, as long as the holes into the cavity are small enough, or as shaped so as to avoid the passage of bees, which would otherwise be able to enter the cavity and thereby potentially cover the acoustic transducer with wax or induce acoustic pressure overestimation.

In some embodiments, a ratio of a characteristic dimension of the acoustically transmitting surface to a characteristic dimension of the beehive can be at least 0.1, preferably at least 0.5, even more preferably at least 0.8.

With this approach it is possible to obtain in the cavity an acoustic pressure that is more representative of the true acoustic power of the bee's colony.

In some embodiments, the acoustic transducer can be configured to measure frequencies in a range comprised between a shorter wavelength and a longer wavelength, and a ratio of a characteristic dimension of the cavity to the shorter wavelength is smaller than 1, preferably smaller than 0.5, even more preferably smaller than 0.2.

With this approach it is possible to ensure a roughly homogeneous sound pressure within the cavity, such that the capability of the measurement will not be dependent on the position of the transducer.

In some embodiments, a ratio of a characteristic dimension of the acoustically transmitting surface to a characteristic dimension of the cavity can be higher than 0.1, preferably higher than 0.25, even more preferably higher than 0.5.

In this manner the acoustic coupling between the acoustically transmitting surface and the volume of the cavity can be beneficially increased, so that the sound within the cavity is a reliable indication of the vibration transmitted by the acoustically transmitting surface submitted to an external acoustic pressure.

In some embodiments, the acoustic transducer can be configured to measure frequencies in a range comprised between a lower frequency and a higher frequency, and the higher frequency is smaller than a critical frequency of the acoustically transmitting surface.

With this approach, the acoustics transparency of the acoustically transmitting surface is maximum and it is possible to avoid, or at least reduce, the tendency of the acoustically transmitting surface to operate in a resonance mode. This is advantageous since it would otherwise be difficult to find materials capable of reliably operating in a resonance mode considering all possible conditions of humidity and temperature in which the device has to operate, and aging.

In some embodiments, the acoustically transmitting surface can have a specific weight comprised between 0.05 kg/m$^2$ and 1.00 kg/m$^2$, preferably between 0.10 kg/m$^2$ and 0.80 kg/m$^2$, even more preferably between 0.30 kg/m$^2$ and 0.50 kg/m$^2$, and/or the area of the acoustically transmitting surface can be comprised between 25 cm$^2$ and 2.500 cm$^2$, preferably between 50 cm$^2$ and 1.500 cm$^2$, even more preferably between 100 cm$^2$ and 1000 cm$^2$, and/or the acoustically transmitting surface can have a thickness comprised between 0.05 mm and 1 mm, preferably between 0.1 mm and 0.8 mm, even more preferably between 0.1 mm and 0.6 mm.

Due to this approach it is possible to generally obtain an acoustically transmitting surface which is thin and mobile, so as to improve the transmission of sound from the beehive to the cavity, but which is also resistant enough, so that there is no risk of the bees getting into the cavity and in order to ensure that the device can reliably operate for a long time.

In some embodiments, the measuring device can further comprise an electronic component, preferably a battery and/or a wireless transceiver, preferably placed within the cavity.

With this approach it is possible to remotely measure the state of the beehive. Moreover, since the electronic component can be placed in the cavity, it is possible to protect the electronic component from the environment and from the bees.

In some embodiments, the wireless transceiver has a very low duty-cycle, below 1%, preferably below 0.1 %, even more preferably below 0.01%.

With this approach, it is possible to protect the bees from electromagnetic exposure, keeping it below normal ambient exposure level.

In some embodiments, the electronic component comprises an acoustic signal processing with a duty cycle that allows to get rid of all possible non-stationary parasitic noise such as meteorologically induced noises, human activity, visiting animal perturbations, or other non-stationary contributions.

Thank to this approach it is possible that the measurement capability is never influenced by parasitic noise sources.

In some embodiments, the acoustically transmitting surface can be a ribbed acoustically transmitting surface comprising a plurality of acoustically transmitting area and a supporting pattern for supporting the acoustically transmitting area.

With this approach it is possible to provide an acoustically transmitting surface which is at the same time externally smooth, structurally strong and thin, at least in parts of it. In this manner sound transmission is improved while reliability of the device is maintained high.

In some embodiments, the single acoustic transducer can be completed by a number of additional acoustics transducers.

Because of this, the measurement of the acoustic pressure inside the cavity and/or the measurement of the velocity of the acoustically transmitting surface can be implemented using different transducers. Moreover, it is also possible to use the cavity for protecting other transducers which are not necessarily acoustic or vibro-acoustic transducers, such as temperature sensors, humidity sensors or GPS transducers.

A further embodiment of the invention can also relate to a beehive comprising the measuring device in accordance with any of the previous embodiments, wherein the measuring device can be placed in the beehive such that the acoustically transmitting surface faces toward the center of the beehive, and/or the measuring device can be configured to replace a beehive frame.

Thanks to this approach it is possible to effectively provide a reliable image of the beehive's sound power within the cavity of the measuring device. Moreover, by replacing one of the frames with the measuring device, or with a partially non-functional frame on which the measuring device is placed, it is advantageously possible to adapt existing beehives with the measuring device with very low modifications and a very reduced amount of work.

**Brief description of the drawings**

Figure 1A schematically illustrates a perspective view of a beehive; figure 1B schematically illustrates a perspective view of the beehive of figure 1A without a cover;

figure 1C schematically illustrates a perspective view of a frame of the beehive of figure 1A and 1B;

figure 2A schematically illustrates a perspective view of a measuring device in accordance with an embodiment of the present invention; figure 2B schematically illustrates a cross-sectional view of the measuring device of figure 2A;

figures 3A and 3B correspond to figures 2A and 2B where several relevant dimensions of the device have been indicated;

figures 4A, 4B and 4C schematically illustrate cross-sectional views of beehives in accordance with embodiments of the present invention;

figure 5 schematically illustrates a perspective view of a measuring device in accordance with an embodiment of the present invention;

figure 6A schematically illustrates a perspective view of a measuring device in accordance with an embodiment of the present invention; figure 6B schematically illustrates a cross-sectional view of the measuring device of figure 6A;

figure 7A schematically illustrates a front view of a ribbed acoustically transmitting surface in accordance with an embodiment of the present invention; figure 8B schematically illustrates a cross-sectional view of the ribbed acoustically transmitting surface of figure 7A.

figure 8A schematically illustrates a perspective view of a measuring device in accordance with an embodiment of the present invention; figure 8B schematically illustrates a cross-sectional view of the measuring device of figure 8A.

**Detailed description of the drawings**

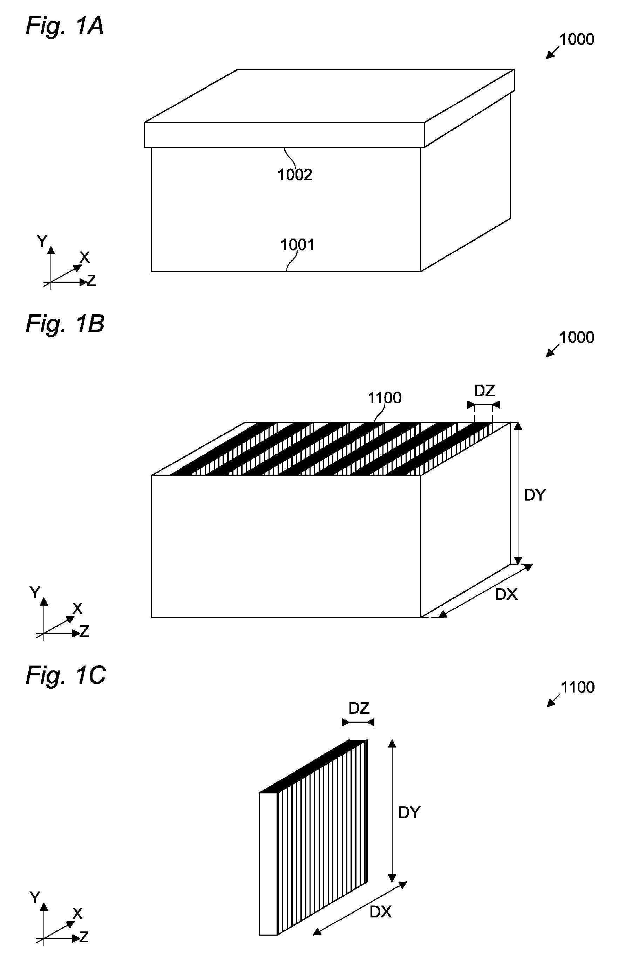

Figure 1A schematically illustrates a perspective view of a beehive 1000. The beehive 1000 is schematically illustrated as comprising a body 1001 and a cover 1002. It will be understood that the body 1001 and/or the cover 1002 may comprise an opening for allowing the bees to get in and out of the beehive 1000. It will be further understood that alternative arrangements and/or constructions of the beehive 1000 are known in the art and the present invention can be applied thereto. The specific illustration of the beehive 1000 is provided only with the aim of visually explaining how the invention can work in relation with an exemplary beehive.

Figure 1B schematically illustrates a perspective view of the beehive 1000 of figure 1 A without the cover 1002. As can be seen, the body 1001 of the beehive 1000 defines a volume comprising a plurality of frames 1100. Figure 1C schematically illustrates a perspective view of the frame 1100 of the beehive 1000 of figure 1A and 1B. Generally speaking, each of the frames 1100 has a length DX and a height DY substantially corresponding to the internal dimensions of the body 1001 and a thickness DZ. The thickness DZ is smaller than the length of the body 1001 in the Z direction, so as to allow several frames 1100 to be placed parallel to each other. It will be understood that the frame 1100 can have a specific shape allowing it to fit into the body 1001. For instance, the body 1001 can have slots in which the frame 1000 is inserted. For the understanding of the invention, however, the specific and detailed shape of the frame 1100 and of the body 1001 is not relevant and will therefore not be discussed.

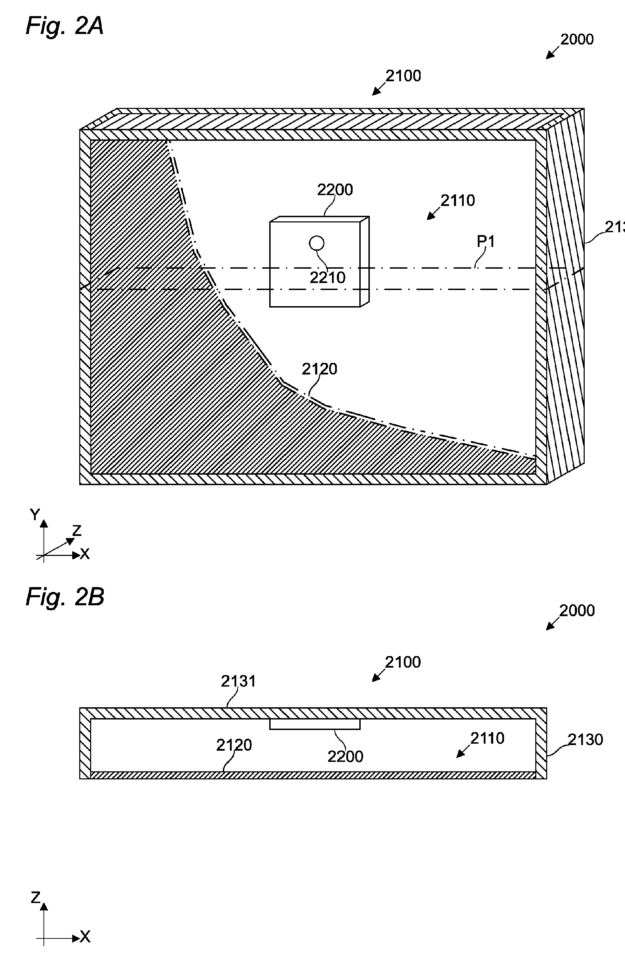

Figure 2A schematically illustrates a perspective view of a measuring device 2000 in accordance with an embodiment of the present invention. Figure 2B schematically illustrates a cross-sectional view of the measuring device 2000 of figure 2A, taken along plane P1 indicated in figure 2A.

The measuring device 2000 comprises a frame 2100, 5100, 6100, 8100 defining a cavity 2110. The frame 2100, 5100, 6100, 8100 comprises at least an acoustically transmitting surface 2120 and a support structure 2130, supporting the acoustically transmitting surface 2120 and generally providing stability for the device 2000. The acoustically transmitting surface 2120 is designed to allow at least a range of predetermined frequencies to propagate to the cavity 2110, as will be described in the following. An acoustic transducer 2200 is placed within the cavity 2110. The acoustic transducer can be, for instance, a microphone, an accelerometer or a piezoelectrical material. In the illustrated case, the acoustic transducer is a microphone and comprises a membrane 2210. The acoustic transducer is designed to measure the sound within cavity 2110. By using the output of the acoustic transducer 2200 it is thereby possible to have an indication of the sound within the beehive and correlate this with the activity status of the beehive.

It will be noted that, for clarity of illustration, in figure 2A the acoustically transmitting surface 2120 is illustrated as being partially cut so as to allow the acoustic transducer 2200 to be visible. Generally, the acoustically transmitting surface 2120 will cover the entire face defined by the shape of the support structure 2130, as illustrated in figure 2B. More specifically, the acoustically transmitting surface 2120 allows sound to be transmitted through itself, by the principle of acoustics transparency. That is, the acoustic pressure acting on one side of the acoustically transmitting surface 2120 induces a vibration in the acoustically transmitting surface 2120, which recreates an acoustic pressure within the cavity 2110. In this manner it is possible to reproduce into the cavity 2110 an image of the external pressure, even in those cases where the cavity 2110 is totally sealed. In particular, as will be described later, the physical characteristics of the acoustically transmitting surface 2120 are such that, in some embodiments, a specific frequency range can be better transmitted than others and such a specific frequency range can be a frequency range which is relevant to the bees' activity, for instance the range from 100 Hz to 300 Hz or 100 Hz to 600 Hz. Thanks to this approach, the surface 2120 allows an efficient acoustic transmission, over a selected range of frequency, from the external environment into the cavity 2110, where the acoustic pressure is measured by transducer 2200.

In those cases where the acoustic transducer 2200 is an accelerometer or a piezoelectric sensor, the acoustic transducer 2200 will be placed on the acoustically transmitting surface 2120, so as to measure the vibrations thereof. When the acoustic transducer 2200 is a microphone, as described above, its placement can be freely chosen at any position of the cavity.

The support structure 2130 is illustrated as being thicker than acoustically transmitting surface 2120. This is to illustrate that the support structures 2130 can be made thicker so as to provide a sturdy and resilient construction for the measuring device 2000, while the acoustically transmitting surface 2120 can be made thinner so as to allow transmission of a selected range of frequencies, as will be discussed in the following. However, the present invention is not limited thereto. In some embodiments, it could also be possible that the materials chosen for the support structure 2130 allow it to be thinner than the acoustically transmitting surface 2120.

The thickness, in the Z direction, of the support structure 2130 can be freely chosen as this does not have an impact on the acoustic performances of the device. In some cases it can therefore be preferable to provide a thin device 2000, for instance thinner than 2cm, as this can be more easily integrated in the beehive.

The acoustic transducer 2200 is designed to pick up acoustic pressure through the acoustically transmitting surface 2120. The acoustic transducer 2200 is only schematically illustrated. In particular, in some embodiments, the acoustic transducer 2200 could actually comprise not only an acoustic transducer itself, but also the circuitry for amplifying and/or treating the signal issued by the acoustic transducer. This provides the additional advantage that the signal issued by the acoustic transducer can be treated by the circuitry without the signal being corrupted by a long transmission line. In the illustrated embodiment, the acoustic transducer 2200 is placed on the back-wall 2131, part of the support structure 2130. In general, however, the acoustic transducer can be placed on any point of the cavity 2210, particularly when a microphone is used as acoustic transducer, and alternative placements of the acoustic transducer 2200 will be discussed later.

It will be understood that, although only one acoustic transducer 2200 is illustrated as being present in the cavity, the present invention is not limited thereto. In some cases a plurality of acoustic transducers 2200 could be present instead. This provides the advantage of redundancy and/or the possibility to average the output of the plurality of acoustic transducers 2200 so as to obtain a better measurement in case, for instance, of a deviation of the characteristics of an acoustic transducer 2200 due to ageing, or to perform more advanced signal processing functions.

One of the advantages of device 2000 is that the acoustic transducer 2200 is physically separated from the bees. This avoids the acoustic transducer 2200 being covered in wax or propolis or damaged in other ways by the bees, moisture or other external degradation effects. There is no risk that the bees will cover the acoustically transmitting surface 2120 is a significant manner, as bees generally never cover smooth surfaces with wax or propolis. Whether the support structure 2130 is covered or not by the bees is irrelevant, since support structure 2130 does not provide a relevant sound transmission to acoustic transducer 2200.

One further advantage of this approach is that positioning the acoustic transducer 2200 within cavity 2110 avoids the possibility of a bee getting too close to the acoustic transducer and saturating the recorded signal, thereby causing a malfunctioning of the measuring device. It should be noted that, in order to achieve this advantage, or more generally for the invention to work, it is not necessary for the cavity 2110 to be completely sealed. While some embodiments may provide a completely sealed cavity 2110, the present invention is not limited thereto. In particular, in some embodiments, some portions of the support structures 2130 and/or of the acoustically transmitting surface 2120 may be at least partially porous, as long as the openings do not allow a bee to pass through. For instance the porous portions may be realized with sintered metal, for instance wintered copper, and/or porous plastics. In those cases, the materials may have from micrometric to sub-millimetric porosity.

One further advantage consists in that the cavity 2110 operates as a so-called "pressure cavity". That is, the acoustic pressure is approximately the same everywhere in the cavity 2110. This allows the acoustic transducer 2200 to be positioned at any location within cavity 2110, as the acoustic pressure is independent of the position.

Thanks to this design it is possible to measure the noise within the beehive and obtain a signal indicative of the bee's level of activity and/or health. In some embodiments, instead of continuously measuring the sound, it is possible to measure with a reduced duty-cycle, for instance 0.5 seconds every minute, so as to reduce power consumption of the device 2000. Moreover, this provides a filtering effect of those parasitic noises which are not stationary over a period of some minutes, such as wind noise, rain, noise due to a passing vehicle or animal, etc.

The recorded sound can therefore be transmitted to a signal treatment circuitry, either placed within an electronic component 5400 placed within the device, as will be described later, or within the acoustic transducer 2200 itself, or in an unit external to the device 2000. Different signal treatments may provide different indicators of the bees' activity. For instance the signal collected at night time can be used as a background noise, for instance due to ventilation. By subtracting such background noise from the signal measured during the day, an activity signal which is indicative of the bees' activity can be obtained.

The signal processing can advantageously be done by device 2000, such that the amount of data to be transmitted outside of device 2000 can be contained to a minimum, thereby extending battery life. For instance, the minimum, maximum and average values of the above indicated activity signal can be computed at regular intervals, for instance every 10 minutes, and those values can be transmitted outside of the device 2000, instead of the raw signal collected by the acoustic transducer 2200.

Moreover, by calculating the integral of the above indicated activity signal, or of the above indicated minimum, average and maximum value, for instance over a period of one day, a productivity index can be computed, which is proportional to the expected productivity of the bees. In this manner, the beekeeper has an indication on when the beehive is ready for collection of the honey. Such index can also be transmitted outside of the device 2000.

By performing such signal processing in the device 2000, the amount of data to be transmitted is advantageously limited, which allows the use of ultra low-power wireless transceivers. This in turn increases battery life and provides the advantage that the wireless transmission has no biological effect on the bees.

It will be further noted that, for clarity of illustration, in figure 2A the back-wall 2131 is not illustrated, so at to allow a clear representation of the reference numerals within cavity 2110. The back-wall 2131, facing the acoustically transmitting surface 2120, is illustrated in figure 2B.

The shape of the support structure 2130, or of the frame 2100, 5100, 6100, 8100, is not fixed and any shape which allows the support structure 2130 to support an acoustically transmitting surface 2120 can be employed. That is, the frame 2100, 5100, 6100, 8100 can have a substantially rectangular structure, as illustrated, a circular structure, a triangular structure, an oval structure, or any structure allowing an acoustically transmitting surface 2120 to be at least one face of the frame 2100, 5100, 6100, 8100.

Similarly, the acoustically transmitting surface 2120 does not have to have a rectangular shape. As will be described later, the physical parameters of the acoustically transmitting surface 2120 are relevant for the acoustically transmitting surface 2120 to operate correctly, rather than its specific shape. Moreover, as will be described more in details in the following, it will be noted that the acoustically transmitting surface 2120 does not need to be a single surface, such as illustrated in figures 2A and 2B. Instead, the acoustically transmitting surface 2120 can be the combination of several surfaces and examples will be illustrated in the following.

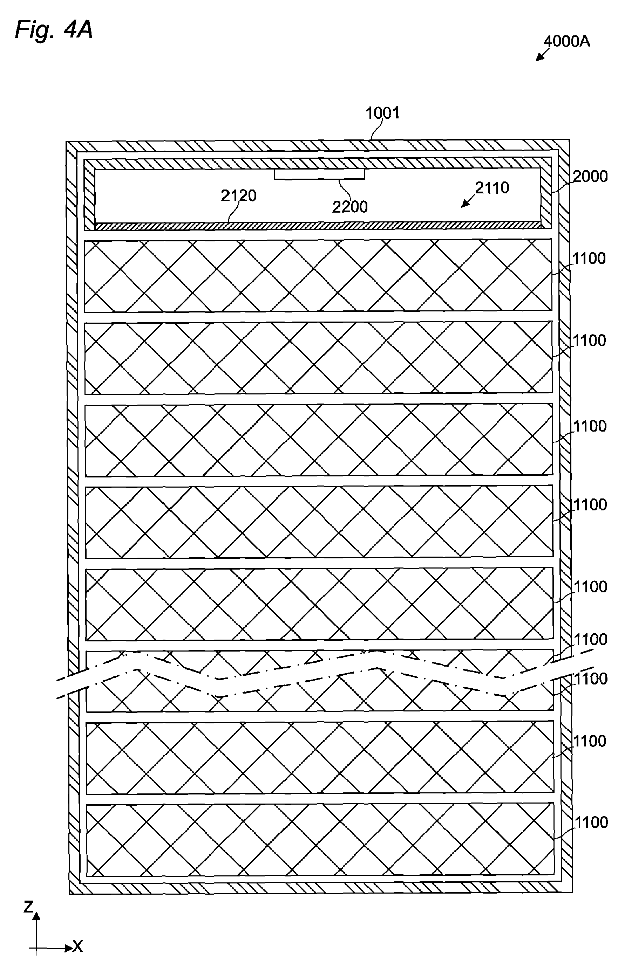

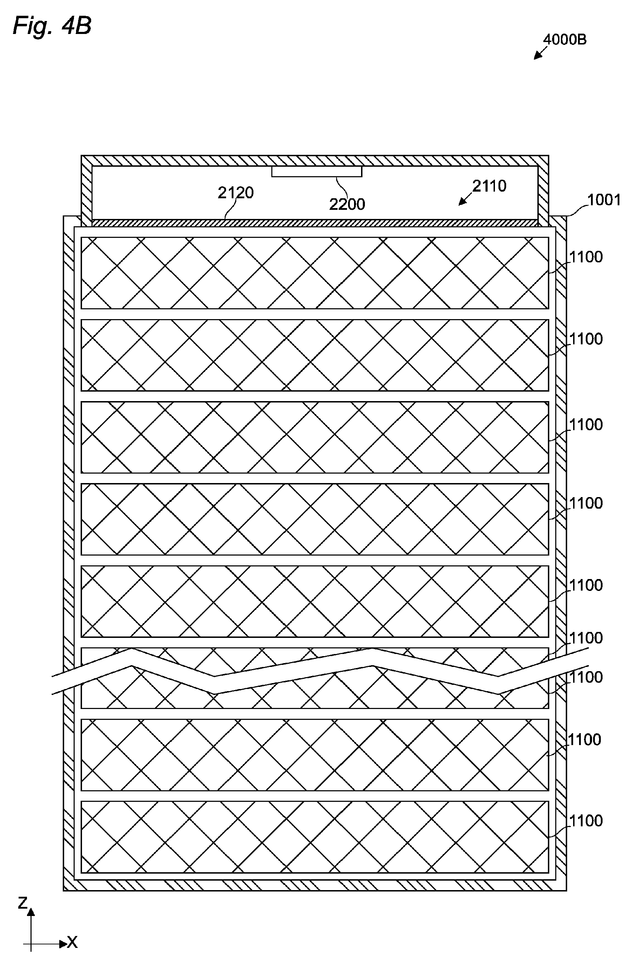

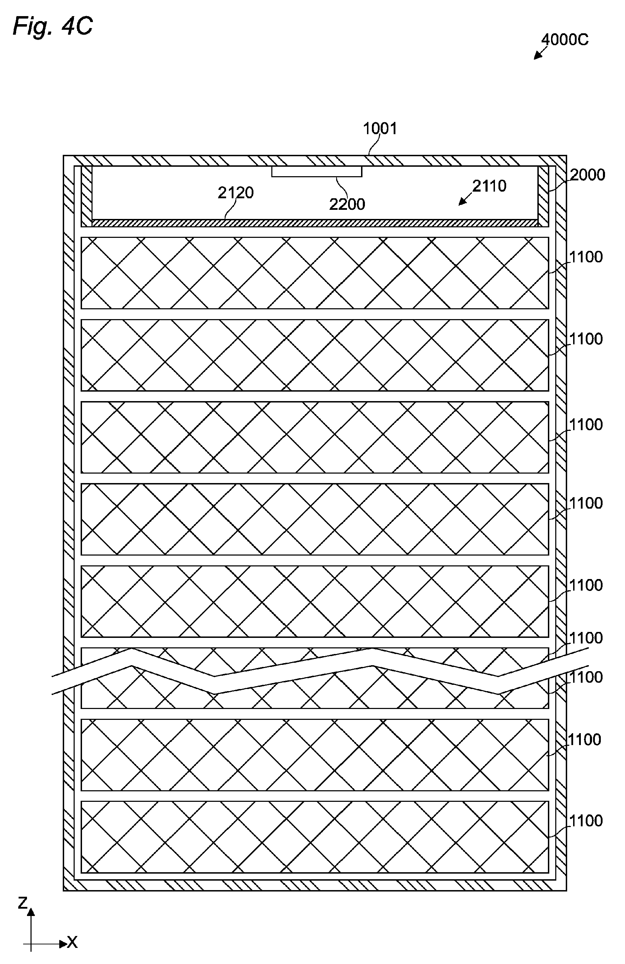

Figures 4A, 4B and 4C schematically illustrate cross-sectional views of beehives in accordance with embodiments of the present invention. In particular, the figures illustrate possible placement of the device 2000 in a beehive 1000. It will be understood that some of the dimensions in the drawings have been exaggerated for clarity of illustration. For instance, in some physical embodiments, the thickness along axis Z of the frames 1100 and/or of the measuring device 2000 can be smaller than represented, so as to allow the introduction of more frames and/or measuring devices in the body 1001.

The beehive 4000A of figure 4A is substantially similar to the beehive 1000 of figures 1A - 1C and comprises a wall 1001 which forms part of the body 1001. As can be seen in figure 4A, the device 2000 can be placed within the beehive 4000A in a manner similar to the frames 1100, for instance by replacing a frame 1100 with the device 2000. The advantage of this approach consists in the fact that that the beehive 4000A does not require any modification in order to implement the device 2000.

The device 2000 can be advantageously placed in the beehive 4000A such that the acoustically transmitting surface 2120 faces toward the center of the beehive 3000. Thanks to this approach, it is possible to maximize the exposure of the acoustically transmitting surface 2120 to the noise generated by the bees operating in frames 1100. In particular, although the device 2000 has been represented as being placed at one of the extremities of the beehive 4000A, the invention is not limited thereto and the device 2000 could actually be placed in place of any of the illustrated frames 1100.

The beehive 4000B as illustrated in figure 4B incorporates the device 2000 into its peripheral wall 1001. In particular, a connection can be achieved between the peripheral wall 1001 of the beehive 4000B and with the support structure 2130 of the device 2000, such as illustrated. In this manner, the acoustically transmitting surface 2120 still faces the interior of the beehive 4000B with the additional advantage that none of the frames 1100 needs to be removed from the beehive 3000. This is particularly advantageous, for instance, in those cases where the dimension of the device 2000 is smaller than the dimension of the frame 1100 and replacing a frame 1100 with a smaller device 2000 would result in waste of space within the beehive 4000B.

The beehive 4000C also connects the device 2000 to the peripheral wall 1001. In this case, however, the connection is such that the back-wall 2131 is replaced by the peripheral wall 1001 of the beehive 4000C. This provides the beneficial advantage that the device 2000 can be fixedly attached to the beehive while also reducing its dimension thanks to the removal of the back-wall 2131. Moreover, when compared to the embodiment of figure 4B, the beehive 4000C does not require removal or cutting through the peripheral wall 1001.

It will be understood that several other placement of the device in a beehive are possible, as long as the acoustically transmitting surface 2120 faces the interior of the beehive. Thus, for instance, the device could horizontally lie in the beehive 1000, for instance on the bottom thereof or under the lid 1002 or it could be placed on the vertical walls of body 1001, but perpendicularly to the frames 1100 instead of parallel.

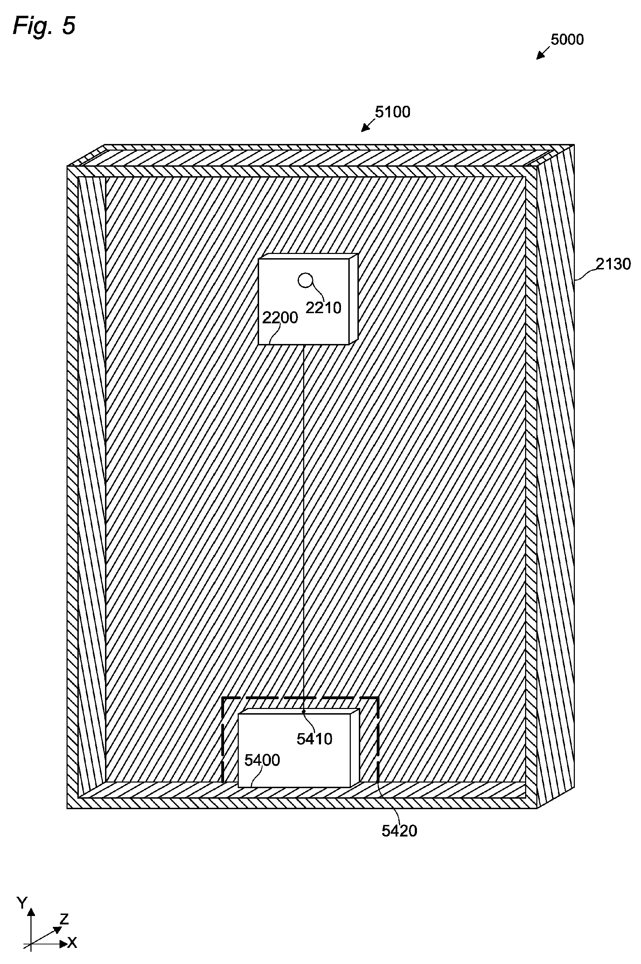

Figure 5 schematically illustrate a perspective view of measuring devices 5000 in accordance with a further embodiment of the present invention. In the figure, the acoustically transmitting surface 2120 has not been illustrated, for clarity of representation.

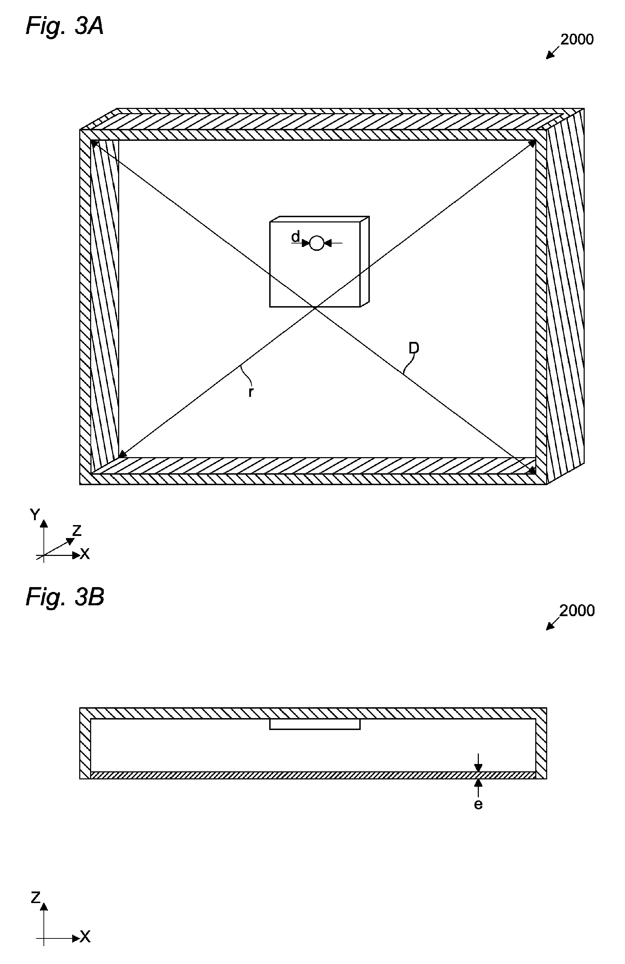

The measuring device 5000 differs from measuring device 2000 due to the presence of an additional electronic component 5400. The electronic component could be, for instance, a battery and/or a wireless transceiver. The electronic component 5400 can be connected to the acoustic transducer 2200 by means of a wire 5410. In some embodiments, the wire can also advantageously function as an antenna. Moreover, the device 5000 differs from device 2000 by having a more elongated shape, so as to clarify that the shape of the device is not fixed to the one illustrated in figures 2A and 3A.

As for the acoustic transducer 2200, the placement of the electronic component 5400 within the cavity 2110 is not limited to the illustrated position. In principle, the electronic component 5400 could be placed at any position within cavity 2110. It will however be understood that the electronic component 5400 does not need to be placed in the cavity 2110. Instead, it could be placed outside of the frame 2100, 5100, 6100, 8100, for instance on the exterior part of back-wall 2131. In the illustrated embodiment, by placing the electronic component 5400 within the cavity 2110, it is possible to avoid the bees getting in contact with the electronic component and potentially ruining it.

In further advantageous embodiments, an optional opening 5420 can be provided in the back-wall 2131, or on any other part of the frame 2110 from which the electronic component 5400 can be accessed. The opening 5420 allows an easy replacement of the electronic component 5400 or parts thereof, for instance the replacement of a battery.

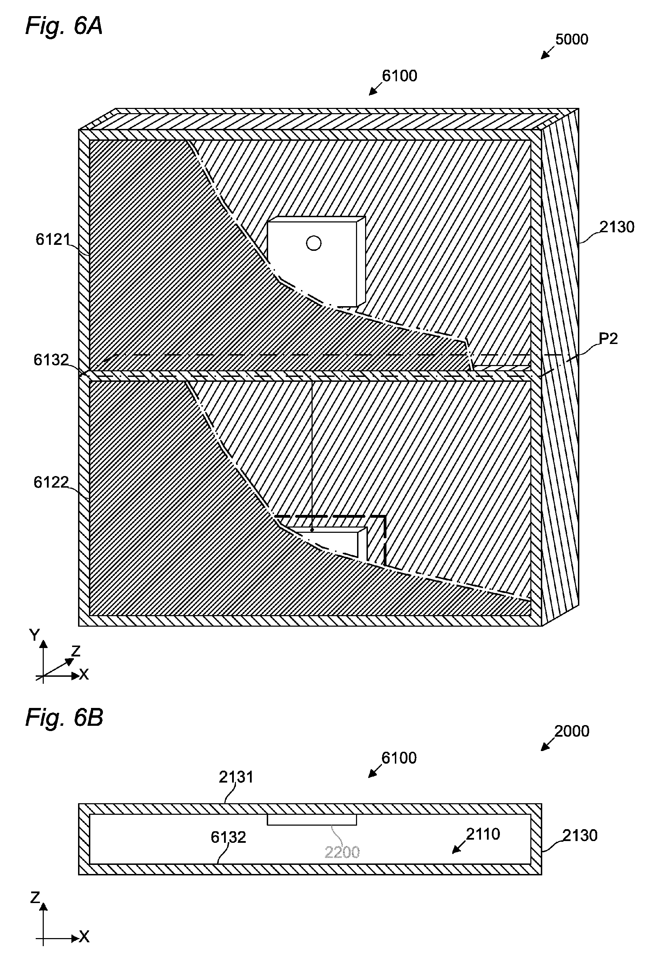

Figure 6A schematically illustrates a perspective view of a measuring device 6000 in accordance with an embodiment of the present invention. Figure 6B schematically illustrates a cross-sectional view of the measuring device 6000 of figure 6A, taken along plane P2.

In particular, the measuring device 6000 differs from measuring device 5000 due to the presence of one supporting beam 6132. More specifically, the supporting beams 6132 can have characteristic similar to those of the supporting surfaces 2130 and is provided so as to structurally support the acoustically transmitting surface 2120. In the illustrated embodiment, the acoustically transmitting surface 2120 is therefore divided in two parts 6121 and 6122 by the supporting beams 6131. The two parts 6121 and 6122 operate together as if they were a single acoustically transmitting surface 2120 having the sum of the areas of the two parts.

It will be clear that the number of the supporting beams or, said otherwise, the number of parts composing the acoustically transmitting surface 2120 is not limited to those illustrated. Any number of acoustically transmitting surface parts and/or any number of supporting beams can be implemented. It will further be clear that, although this embodiment is based on the device 5000, a similar modification can be carried out to any other embodiment of the invention.

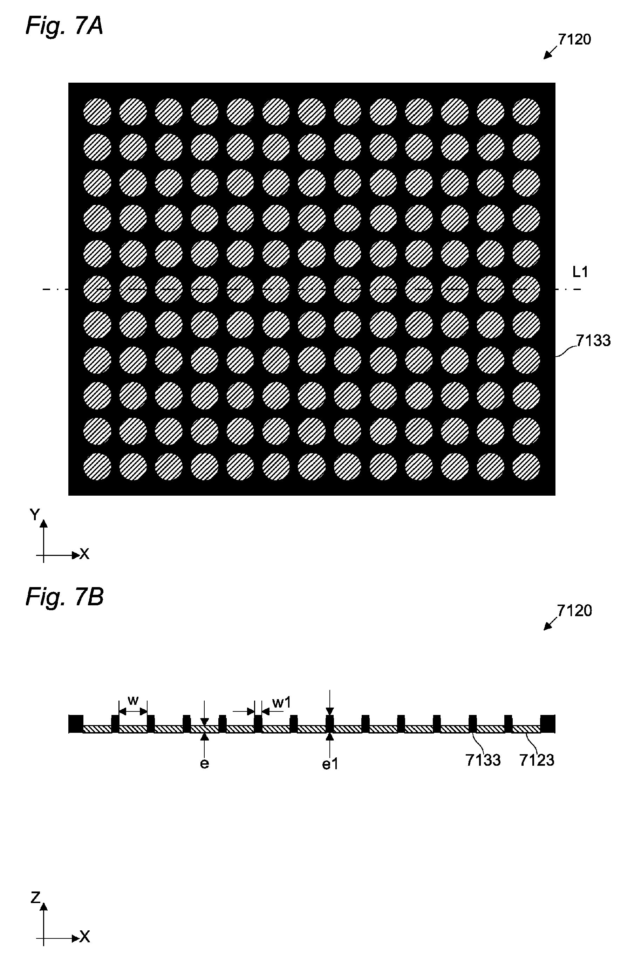

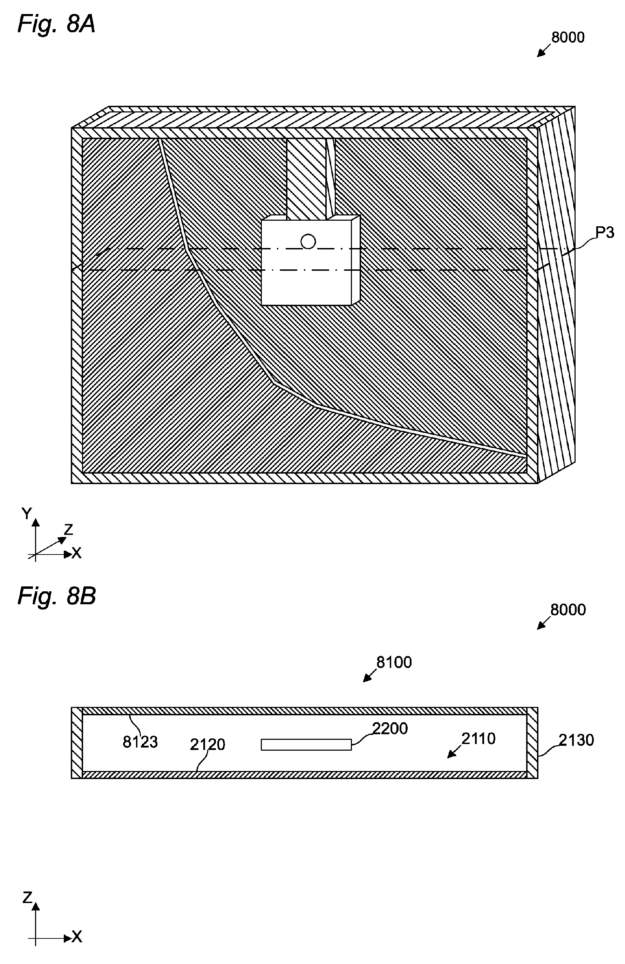

The above-described principle of dividing the acoustically transmitting surface 2120 in several parts can also be applied without the use of the supporting surfaces 2130, as will be described with reference to figures 7A and 7B. Figure 7A schematically illustrates a front view of a ribbed acoustically transmitting surface 7120 in accordance with an embodiment of the present invention; figure 8B schematically illustrates a cross-sectional view of the ribbed acoustically transmitting surface 7120 of figure 7A.

In particular, ribbed acoustically transmitting surface 7120 comprises thinner areas, namely the acoustically transmitting area 7123 operating as the previously described acoustically transmitting surfaces, and thicker areas, namely a supporting pattern 7133, providing structural stability to the ribbed acoustically transmitting surface 7120. This allows the acoustically transmitting areas 7123 to have a very small thickness "e", for instance less than 1 mm, preferably less than 0.7mm, even more preferably 0.4 mm or less, thereby allowing sound to better be propagated into the cavity 2110. At the same time, the thickness "e1" of the supporting pattern 7133 can be thicker than "e", for instance more than 1 mm, preferably more than 1.5 mm, even more preferably 2 mm or more, thereby providing structural stability to the ribbed acoustically transmitting surface 7120. In some embodiments, the acoustically transmitting area 7123 and the supporting pattern 7133 can advantageously be made of the same material, only having different thicknesses. This allows a simple manufacturing, for instance by plastic molding. However, the invention is not limited thereto and the two areas could also be implemented with two different materials. In this case, the thickness of the two materials is not primary importance, as long as the supporting pattern 7133 can support, or structurally support, the acoustically transmitting area 7123.

In the illustrated example, the acoustically transmitting area comprises a plurality of substantially circular areas having a diameter "w", for instance less than 20 mm, more preferably less than 15 mm, even more preferably 8 mm or less, with a pitch from center to center, in the vertical and/or horizontal direction of, for instance, 2 mm more than the diameter "w". This results in a width of the supporting pattern "w1" at its thinnest point of 2mm, which is sufficient for ensuring structural stability of the acoustically transmitting surface 7120 while nevertheless allowing the majority of the area of the acoustically transmitting surface 7120 to be occupied by the acoustically transmitting area 7123. In particular, in the illustrated embodiment and with "w" equal to 8 mm and "w1" equal to 2 mm, the acoustically transmitting area 7123 occupies approximately 40% of the ribbed acoustically transmitting surface 7120. It will be clear that this percentage can be advantageously increased by increasing the ratio "w/w1" or by changing the shape of the and a supporting pattern 7133 and/or of the acoustically transmitting areas 7123.

While in the ribbed acoustically transmitting surface 7120 the acoustically transmitting areas 7123 are illustrated as being circular, the present invention is not limited thereto and other shapes could be implemented, such as oval, triangular, square or, more generally, polygonal. Moreover, it will be understood that the sizes and distribution of the acoustically transmitting areas 7123 on the ribbed acoustically transmitting surface 7120 does not necessarily need to be regular, such as illustrated. For instance, the acoustically transmitting areas 7123 could have a size increasing as they are closer to the center of the ribbed acoustically transmitting surface 7120, as the structural stability to be provided by the supporting pattern 7133 is lower in the center of the ribbed acoustically transmitting surface 7120 than in the periphery.

Moreover, the illustrated embodiment provides a substantially flat surface to the exterior of the ribbed acoustically transmitting surface 7120 by extending the supporting pattern 7133 toward the interior of cavity 2110. This is advantageous as the bees will tend to cover less a flat surface than a ribbed surface. However the invention is not limited to this implementation and the opposite could be implemented as well.

It will further be understood that the ribbed acoustically transmitting surface 7120 of the present embodiment can be implemented instead of any acoustically transmitting surface, or parts thereof, described in other embodiments.

Figure 8A schematically illustrates a perspective view of a measuring device 8000 in accordance with an embodiment of the present invention. Figure 8B schematically illustrates a cross-sectional view of the measuring device 8000 of figure (A, taken along plane P3.

In particular, the measuring device 8000 differs from measuring device 2000 due to the presence of an additional acoustically transmitting surface 8124 instead of the back-wall 2131. In this manner, by placing two acoustically transmitting surfaces on both sides of the device 8000 the dimensions in the Y and or X directions can be reduced, as the two areas of the acoustically transmitting surfaces 2120 and 8124 add together as if they were one single acoustically transmitting surface 2120.

The acoustic transducer 2200 is illustrated as being suspended within cavity 2110 by an extension of support structure 2130, roughly in the middle of the two acoustically transmitting surfaces 2120 and 8124. This implementation can also be used in other embodiments. Moreover, the present embodiment is not limited thereto as the acoustic transducer could, instead, be placed directly on any of the walls of the support structure 2130. In particular, as previously described, when the acoustic transducer is a microphone, it can be freely placed at any point of the cavity. When the acoustic transducer is not a microphone it can advantageously be placed on the acoustically transmitting surface, so as to measure the vibrations thereof.

It will be clear that this embodiment can be combined with any previously described embodiment. For instance, one of both of the acoustically transmitting surfaces 2120, 8124 could be divided in two or more parts such as described with reference to measuring device 5000.

In the following, advantageous physical parameters of the device 2000 will be discussed. Further advantageous relationships between those parameters and the beehive dimensions, as well as other parameters of the beehive colony will be presented.

Although those parameters and relationships are described together, for the sake of clarity of the description, it will be clear that they do not all necessarily have to be implemented for the invention to work. To the contrary, each single parameter and/or each single relationship between them is to be understood as a further, independent, advantageous characteristic of a particular embodiment of the invention.

The parameters will be referred to as:

| Name | Description | Unit |
|---|---|---|
| Fmax | the highest frequency to be measured by the device | Hz |
| $\lambda$min | the wavelength in air of Fmax | m |
| a | the characteristic dimension of the acoustic source | m |
| r | the characteristic dimension of the cavity | m |
| D | the characteristic dimension of the acoustically transmitting surface or the acoustically transmitting area | m |
| e | the thickness of the acoustically transmitting surface or the acoustically transmitting area | m |
| Mv | volumic mass of the acoustically transmitting surface or the acoustically transmitting area | Kg/m$^3$ |
| Zac | Acoustic impedance of air | Pa*s/m |

By characteristic dimension it is meant the largest dimension of a given shape, through which sound can propagate. That is, the diagonal, in the case of a rectangle, the diameter, in the case of a circle, etc.

Several of those parameters have been illustrated, whenever possible, in figures 3A and 3B. Those figures correspond to figures 2A and 2B where the acoustically transmitting surface 2120 has been removed from figure 3A, for clarity of illustration.

Based on those parameters, the following relationships can be advantageously defined:

R1) D/a, is at least 0.1, preferably at least 0.5, even more preferably at least 0.8

This allows a better sound transfer from the interior of the beehive 1000 through the acoustically transmitting surface 2120 into the cavity 2110 for the following reason: the larger the acoustically transmitting surface 2120 is, the better the device 2000 will be capable of measuring the global activity of the bees colony by measuring the sound power they generate through spatial integration, rather than the sound intensity. Here, by sound intensity it is meant the sound pressure level at a specific point, which is usually what an acoustic transducer measures. On the other hand, by the integrating effect allowed by the size of the acoustically transmitting surface 2120, it is possible to combine the sound intensity at each point of the acoustically transmitting surface 2120, thus rendering a more precise image of the sound power of the entire colony, and not simply of the sound intensity at the specific given point, where the acoustic transducer is located.

The characteristic dimension "a" of the beehive can be computed as the longest line contained in the volume of the beehive.

R2) r/λmin is smaller than 1, preferably smaller than 0.5, even more preferably smaller than 0.2.

The acoustic transducer 2200 is configured to measure frequencies in a range comprised between a shorter wavelength λmin and a longer wavelength λmax. For instance, when assuming a speed of sound in air of 340 m/s the shorter wavelength λmin at 300 Hz will be of approximately 1.13 m while the longer wavelength λmax at 100 Hz will be of approximately 3.4 m. If the characteristic dimension "r" of the cavity 2110 is smaller than the shorter wavelength to be measured, it can be ensured that the pressure within the cavity 2110 will be approximately homogeneous at any given point of the cavity 2110. As previously described, this advantageously allows a free positioning of the acoustic transducer 2200 within the cavity 2110.

R3) D/r is higher than 0.1, preferably higher than 0.25, even more preferably higher than 0.5

Thanks to this approach, it can be ensured that the acoustically transmitting surface 2120 can reliably recreate an acoustic pressure within a cavity 2110, representative of the acoustic pressure incident on to the transmitting surface 2120.

R4) Fmax < $F_M$

where the critical frequency $F_M$ of the acoustically transmitting surface is defined as

$$(Eq1) \quad F_M = (1 / 2\pi) \cdot (2 \cdot \rho_{air} \cdot c_{air}) / \cos(\theta) / (Mv \cdot e)$$

where:

- $\rho_{air}$ is the volumic mass of air;

- $c_{air}$ is the speed of sound in air;

- $\theta$ is the incident angle of the sound to the acoustically transmitting surface 2120. In particular, $\theta$ is the angle between the wave fronts and the perpendicular to the acoustically transmitting surface 2120. That is, $\theta = 0$ represents soundwaves with their wave fronts parallel to the acoustically transmitting surface 2120;

- Mv is the volumic mass of the acoustically transmitting surface 2120

- e is the thickness of the acoustically transmitting surface 2120.

In some embodiments of the invention Fmax can be, for instance, 300 Hz. With this numerical value, the condition of R4 can be satisfied for a value of $F_M$ beyond 300 Hz.

The critical frequency $F_M$ is the frequency that separates two different behaviors of acoustic transparency. Below the critical frequency, the acoustic transparency is maximum and constant. Beyond the critical frequency, the acoustics transparency is reduced by 6dB each time the frequency is doubled. Thus, by selecting a higher critical frequency, i.e. by reducing the volumic mass and thickness of surface 2120, it is therefore possible to take advantage of the acoustic transparency over the global frequency band of interest.

Although resonating the acoustically transmitting surface 2120 may be advantageous in some isolated cases, it has been shown that in practice it is very difficult to control the resonating frequency in a reliable manner over the lifetime of the device, particularly when the variation of the resonating frequency as a function of the temperature and/or of the aging of the device and/or of the potential material deposited by the bees on the acoustically transmitting surface 2120 is taken into account. Thus, with the aim of obtaining a reliable device, a higher critical frequency $F_M$ can be selected as described above.

In some embodiments, the acoustically transmitting surface 2120 has a specific weight comprised between 0.05 kg/m$^2$ and 1.00 kg/m$^2$, preferably between 0.10 kg/m$^2$ and 0.80 kg/m$^2$, even more preferably between 0.30 kg/m$^2$ and 0.50 kg/m. In addition, in some embodiments, the acoustically transmitting surface 2120 has a thickness comprised between 0.05 mm and 1 mm, preferably between 0.1 mm and 0.8 mm, even more preferably between 0.1 mm and 0.6 mm, for instance when made with Polypropylene. Those specific features allow the acoustically transmitting surface 2120 to reliably transmit the acoustic pressure from the beehive into the cavity 2110.

Moreover, in some embodiments, the first area, namely the area of the acoustically transmitting surface 2120, is comprised between 25 cm$^2$ and 2.500 cm$^2$, preferably between 50 cm$^2$ and 1.500 cm$^2$, even more preferably between 100 cm$^2$ and 1000 cm$^2$. For instance, in one embodiment, the height could be approximately 26 cm and the length to be approximately 40 cm. Thanks to this approach, the size of the device 2000 is comparable to the size of one of the frames 1100 of the beehive 1000. In addition to allowing a better measurement of the sound from within the beehive 1000, as previously described, this also allows the device 2000 to be inserted in the beehive instead of one of the frames 1100, thus allowing the device 2000 to be used without any modification to the beehive 1000.

In some specific embodiments, the support structure 2130 can be made of balsa, also known as Ochroma pyramidale, with a thickness of approximately 2mm. Alternatively, or in addition for some parts only thereof, the support structures 2130 can be made of Formica laminate with a thickness up to approximately 0.7mm. Alternatively, or in addition for some parts only thereof, the support structures 2130 can be made of plastic, for instance leachable extractable compliant plastics such as polyethylene with a thickness up to approximately 0.6 mm. Alternatively, or in addition for some parts only thereof, the support structures 2130 can be made of metal, such as Aluminum with a thickness up to approximately 0.2mm or stainless steel with a thickness up to approximately 0.05mm.

In the following, a specific example of a realization of a device in accordance with an embodiment of the invention will be described with specific numerical values. It will be understood, however, that the present invention is not limited to such specific case, which is provided as an example of a particularly advantageous embodiment, as it fulfills several of the advantageous characteristics described above. It will also be understood that, although the numerical values are described together, with the aim of achieving a clear description, it is not necessary to implement all numerical values in a single embodiment. In fact, any combination of the numerical values described below, including also the cases with only one numerical value, could be implemented in a given embodiment of the invention.

| Name | Description | Value |
|---|---|---|
| Fmax | the highest frequency to be measured by the device | 300 Hz |
| λmin | the wavelength in air of Fmax | 1.13 m |
| a | the characteristic dimension of the acoustic source | 0.2 m |
| r | the characteristic dimension of the cavity 2110 | 0.21 m |
| D | the characteristic dimension of the acoustically transmitting surface 2120 | 0.2 m |
| e | the thickness of the acoustically transmitting surface 2120 | 0.0004 m |
| Mv | volumic mass of the acoustically transmitting surface 2120 | 930 Kg/m$^3$ |
| Zac | Acoustic impedance of air | 413 Pa*s/m |

With those numerical values, the parameters and relationships previously described result in the following:

| Name | Value |
|---|---|
| $F_M$ | 339 |
| D/a | 1 |
| r/λmin | 0.19 |
| D/r | 0.95 |
| Fmax/$F_M$ | 0.88 |

Here, with respect to the R4 criterion, the value of $F_M$ is the value computed for the most unfavorable condition namely θ = 0. The inventors have found that, within a beehive, the preferential sound direction is a composition of near and diffuse field and with specular reflections. This generally gives an incident angle higher than 0. That means that, in practical cases, the cos(θ) is likely to be smaller than 1, which makes it easier to respect criterion R2, as it results in a higher value of $F_M$. In other words, if R2 is satisfied for θ = 0, it will also be satisfied for all other values of θ, which are more likely to happen in a real beehive environment.

It will be understood that the present numerical example is only one of the many possible implementations of the invention.

In further possible implementations, the acoustically transmitting surface 2120 can be made, for instance, with the following materials and characteristics:

| Material | Volumic mass (kg/m$^3$) | Thickness (mm) | $F_M$ Hz |
|---|---|---|---|
| Polyethylene | 930 | 0.40 | 339 |
| Polypropylene | 900 | 0.43 | 326 |
| Ochroma Pyramidale (balsa) | 160 | 2.50 | 315 |
| Stainless steel | 7800 | 0.05 | 323 |
| Aluminum | 2700 | 0.15 | 311 |
| Maple | 640 | 0.60 | 328 |
| Fraxinus | 720 | 0.50 | 350 |

As can be seen, all of those possible implementations provide a critical frequency $F_M$ satisfying the previously defined criterion R4.

The inventors have moreover found that, to reject external parasitic noise, the following criterion can be advantageously satisfied for the body 1001 and/or the cover 1002 of the beehive:

R5) $F_M$ < Fmin

where $F_M$ is the critical frequency of the body 1001 and/or the cover 1002 and where Fmin can be, for instance 100 Hz. This provides a reduced acoustics transparency, which reduces the possibility of external sound to interfere with the measuring device.

For a beehive 1000 where the body 1001 and/or the cover 1002 are made, for instance, with wood having a thickness of approximately 25 mm, $F_M$ is roughly 70 Hz, which satisfies the above condition.

Although in the embodiments described above the acoustically transmitting surface is illustrated as being substantially flat, it will be clear that the present invention is not limited thereto. In particular, since the acoustically transmitting surface is not operating in a resonating mode as described above, its shape can also be different, such as a rounded shape and/or a combination of planar surfaces with different orientations, etc.

**List of reference numerals**

1000: beehive
1001: body
1002:cover
1100: bee frame
2000: measuring device
2100, 5100, 6100, 8100: frame
2110: cavity
2120: acoustically transmitting surface
2130: support structure
2131: back-wall
2200: acoustic transducer
2210: membrane
d: characteristic dimension of the membrane
D: characteristic dimension of the acoustically transmitting surface
r: characteristic dimension of the cavity
e: thickness of the acoustically transmitting surface
4000A-C: beehive

5000: measuring device
5100: frame
5400: electronic component
5410: wire
5420: opening
6000: measuring device
6100: frame
6121: acoustically transmitting surface
6122: acoustically transmitting surface
6132: supporting beam
7120: ribbed acoustically transmitting surface
7123: acoustically transmitting area
7133: supporting pattern
e1: thickness of the supporting pattern
w: diameter of the acoustically transmitting surface
w1: width of the supporting pattern
8000: measuring device
8100: frame
8124: acoustically transmitting surface

**Claims**

1. A measuring device (2000, 5000, 6000, 8000) for measuring bees' activity in a beehive (1000), the measuring device (2000, 5000, 6000, 8000) comprising:

   a frame (2100, 5100, 6100, 8100) enclosing a cavity (2110), the frame (2100, 5100, 6100, 8100) comprising at least an acoustically transmitting surface (2120, 6121, 6122, 7123, 8124), and
   an acoustic transducer (2200), placed within the cavity (2110)

2. The measuring device according to claim 1, wherein
   the frame (2100, 5100, 6100, 8100) comprises holes configured so as not to allow the passage of bees.

3. The measuring device (2000, 5000, 6000, 8000) according to any previous claim, wherein
   a ratio of a characteristic dimension (D) of the acoustically transmitting surface (2120, 6121, 6122, 7123, 8124) to a characteristic dimension (a) of the beehive (1000) is at least 0.1, preferably at least 0.5, even more preferably at least 0.8.

4. The measuring device (2000, 5000, 6000, 8000) according to any previous claim, wherein
   the acoustic transducer (2200) is configured to measure frequencies in a range comprised between a shorter wavelength ($\lambda$min) and a longer wavelength, and
   a ratio of a characteristic dimension (r) of the cavity (2110) to the shorter wavelength ($\lambda$min) is smaller than 1, preferably smaller than 0.5, even more preferably smaller than 0.2.

5. The measuring device (2000, 5000, 6000, 8000) according to any previous claim, wherein
   a ratio of a characteristic dimension (D) of the acoustically transmitting surface (2120, 6121, 6122, 7123, 8124) to a characteristic dimension (r) of the cavity (2110) is higher than 0.1, preferably higher than 0.25, even more preferably higher than 0.5.

6. The measuring device (2000, 5000, 6000, 8000) according any previous claim, wherein
   the acoustic transducer (2200) is configured to measure frequencies in a range comprised between a lower frequency (Fmin) and a higher frequency (Fmax), and
   the higher frequency (Fmax) is smaller than a critical frequency ($F_M$) of the acoustically transmitting surface (2120, 6121, 6122, 7123, 8124).

7. The measuring device (2000, 5000, 6000, 8000) according any previous claim, wherein
   the acoustically transmitting surface (2120, 6121, 6122, 7123, 8124) has a specific weight comprised between 0.05 kg/m$^2$ and 1.00 kg/m$^2$, preferably between 0.10 kg/m$^2$ and 0.80 kg/m$^2$, even more preferably between 0.30 kg/m$^2$

and 0.50 kg/m$^2$, and/or
the area of the acoustically transmitting surface (2120, 6121, 6122, 7123, 8124) is comprised between 25 cm$^2$ and 2.500 cm$^2$, preferably between 50 cm$^2$ and 1.500 cm$^2$, even more preferably between 100 cm$^2$ and 1000 cm$^2$, and/or the acoustically transmitting surface (2120, 6121, 6122, 7123, 8124) has a thickness comprised between 0.05 mm and 1 mm, preferably between 0.1 mm and 0.8 mm, even more preferably between 0.1 mm and 0.6 mm.

8. The measuring device (2000, 5000, 6000, 8000) according any previous claim further comprising:

    an electronic component (5400), preferably a battery and/or a wireless transceiver, preferably placed within the cavity (2110).

9. The measuring device (2000, 5000, 6000, 8000) according any previous claim wherein:

    the acoustically transmitting surface (7123) is a ribbed acoustically transmitting surface (7123) comprising a plurality of acoustically transmitting area (7123) and a supporting pattern (7133) for supporting the acoustically transmitting area (7123).

10. A beehive (4000A-C) comprising the measuring device (2000, 5000, 6000, 8000) in accordance with any of the previous claims, wherein
    the measuring device (2000, 5000, 6000, 8000) is placed in the beehive such that the acoustically transmitting surface (2120, 6121, 6122, 7123, 8124) faces toward the center of the beehive (3000), and/or
    the measuring device (2000, 5000, 6000, 8000) is configured to replace a beehive frame (1100).

*Fig. 1A*

1000

1002

1001

Y
X
Z

*Fig. 1B*

1000

1100

DZ

DY

DX

Y
X
Z

*Fig. 1C*

1100

DZ

DY

DX

Y
X
Z

*Fig. 2A*

*Fig. 2B*

*Fig. 3A*

2000

Y
Z
X

*Fig. 3B*

2000

Z
X

Fig. 4A

4000A

Fig. 4B

Fig. 4C

4000C

1001

2120    2200    2110    2000

1100

1100

1100

1100

1100

1100

1100

1100

1100

1100

Z

X

*Fig. 5*

5000

5100

2130

2200

2210

5410

5400

5420

*Fig. 6A*

5000

6100

6121

6132

6122

2130

P2

Y
Z
X

*Fig. 6B*

2000

6100

2131

6132

2200

2110

2130

Z
X

*Fig. 7A*

7120

L1

7133

Y

X

*Fig. 7B*

7120

w

w1

e

e1

7133  7123

Z

X

*Fig. 8A*

8000

P3

Y
Z
X

*Fig. 8B*

8000

8100

8123  2120  2200  2110  2130

Z
X

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2007/224914 A1 (BROMENSHENK JERRY J [US] ET AL) 27 September 2007 (2007-09-27) * paragraphs [0022] - [0028] * * figures 1-3,9 * ----- | 1-6,8-10 | INV. A01K47/06 H04R1/02 A01K47/02 A01K29/00 |
| X | US 2010/062683 A1 (BRUNDAGE TRENTON J [US]) 11 March 2010 (2010-03-11) * figures 1-3 * * paragraphs [0023] - [0039] * ----- | 1-10 | |
| | | | TECHNICAL FIELDS SEARCHED (IPC) A01K H04R |

The present search report has been drawn up for all claims

| Place of search | Date of completion of the search | Examiner |
|---|---|---|
| The Hague | 24 November 2016 | Millward, Richard |

EPO FORM 1503 03.82 (P04C01)

## ANNEX TO THE EUROPEAN SEARCH REPORT
## ON EUROPEAN PATENT APPLICATION NO.

EP 16 17 5269

24-11-2016

| Patent document cited in search report | Publication date | Patent family member(s) | Publication date |
|---|---|---|---|
| US 2007224914 A1 | 27-09-2007 | CA 2573049 A1<br>US 2007224914 A1 | 06-07-2007<br>27-09-2007 |
| US 2010062683 A1 | 11-03-2010 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070224914 A